# EUROPEAN PATENT APPLICATION

(11) **EP 3 136 568 A1**
(43) Date of publication of application: **01.03.2017**
(21) Application number: 16184461.8
(22) Date of filing: 17.08.2016
(51) Int. Cl.: H02K 29/03, H02K 1/14, H02K 15/095, H02K 1/27

(54) **SINGLE PHASE PERMANENT MAGNET MOTOR AND METHOD FOR MAKING SAME**

(30) Priority: 28.08.2015 CN 201510543384
(71) Applicant: Johnson Electric S.A., 3280 Murten (CH)
(72) Inventor: Li, Yue, Hong Kong (HK); Zhou, Chui You, Hong Kong (HK); Wang, Yong, Hong Kong (HK); Li, Yong, Hong Kong (HK)
(74) Representative: Hocking, Adrian Niall

(57) **Abstract**

A single phase permanent magnet motor (10) and a method for making the same are provided. The method includes the steps of: configuring a stator core (30), wherein the stator core (30) comprises a first ring portion (31), tooth bodies (33), and a pole shoe (35) extending from each tooth body (33), a slot opening (37) is defined between each two adjacent pole shoes (35), at least one pole shoe (35) includes a main portion (35a), a connecting portion (35b) and an easily bendable tip (35c), the easily bendable tip (35c) is bent relative to the main portion (35a) about the connecting portion (35b); winding a stator winding (39) around the stator core (30); and bending the easily bendable tip (35c) about the connecting portion (35b) to narrow the slot opening (37). The present invention can change the size of the slot opening (37), thus more rapidly finishing the winding of the stator winding (39) and enhancing the efficiency of the motor fabrication.

## Description

### FIELD OF THE INVENTION

The present invention relates to single phase permanent magnet motors, and a method for making the single phase permanent magnet motor.

### BACKGROUND OF THE INVENTION

In a conventional single phase permanent magnet motor, a stator core is provided as an integral structure, i.e. an outer ring portion and teeth are formed at the same time into an integral structure. Large slot openings are formed between pole shoes of adjacent teeth. The presence of the slot openings can make the motor generate an unduly large cogging torque. The cogging torque can result in the motor generating vibration and noise. Furthermore, because of the limitation of the slot openings, the motor has a small startup angle and poor startup reliability.

### SUMMARY OF THE INVENTION

Thus, there is a desire for a new single phase permanent magnet motor which can facilitate winding and increase the startup reliability.

In one aspect, a single phase permanent magnet motor is provided which includes a stator. The stator comprises a stator core. The stator core comprises a first ring portion, a plurality of tooth bodies extending radially from the first ring portion, and a pole shoe extending from a radial distal end to two circumferential sides of each tooth body. A slot opening is defined between each two adjacent pole shoes. At least one of the two adjacent pole shoes comprises a main portion, a connecting portion and an easily bendable tip sequentially connected in a circumferential direction of the stator. The main portion is connected to the tooth body, the easily bendable tip is bendable with respect to the connecting portion, for changing a distance between the two adjacent pole shoes.

Preferably, the stator further comprises a stator winding wound around the stator core.

Preferably, the stator winding is wound around the tooth bodies.

Preferably, the single phase permanent magnet motor further comprises a rotor rotatable relative to the stator, the rotor comprises a rotor core and permanent magnetic poles arranged along a circumferential direction of the rotor core.

Preferably, the first ring portion is an outer ring portion, the tooth bodies extend inwardly from the outer ring portion, each pole shoe extends from a radial inner end of the corresponding tooth body, and the rotor is rotatably received in the stator.

Preferably, the slot opening has a minimum width greater than zero and less than or equal to four times of a minimum thickness of an air gap defined between the stator and the rotor.

Preferably, an outer circumferential surface of the rotor core defines a plurality of axially-extending grooves each located at a junction of two permanent magnetic poles.

Preferably, a radial cross-sectional area of the connecting portion is less than a radial cross-sectional area of an end of the main portion connected to the connecting portion.

Preferably, the main portion has a radial thickness gradually decreasing in a direction from the tooth body toward the slot openings.

Preferably, the connecting portion comprises a positioning slot defined in an inner circumferential surface of the pole shoe, an inner surface of the easily bendable tip and an inner surface of the main portion are located on a cylindrical surface centered at a rotation axis of the rotor.

Preferably, the positioning slot extends continuously or discontinuously in an axial direction of the motor, and each positioning slot is spaced from the two adjacent tooth bodies by different distances.

Preferably, the number of the positioning slots is the same as the number of the permanent magnetic poles.

Preferably, the slot opening is located at a middle position between two adjacent tooth bodies or offset from the middle portion in a direction away from the adjacent positioning slot.

Preferably, the connecting portion defines a positioning slot, the positioning slot is an invisible positioning slot located between an outer circumferential surface and an inner circumferential surface of the pole shoe.

In another aspect, a method for making a single phase permanent magnet motor is provided, which includes the steps of: configuring a stator core, wherein the stator core comprises a first ring portion, a plurality of tooth bodies extending radially from the outer ring portion, and a pole shoe extending from a radial distal end to two circumferential sides of each tooth body, a slot opening is defined between each two adjacent pole shoes, at least one of the two adjacent pole shoes includes a main portion, a connecting portion and an easily bendable tip sequentially arranged in a circumferential direction of the stator, the easily bendable tip is bent relative to the main portion about the connecting portion; winding a stator winding around the stator core; and bending the easily bendable tip about the connecting portion to narrow the slot opening.

Preferably, the method further includes the step of assembling a rotor, wherein the rotor has permanent magnetic poles arranged along a circumferential direction of the rotor, the permanent magnetic poles and the pole shoes define an air gap therebetween; the slot opening has a minimum width greater than zero and less than or equal to four times of a minimum thickness of the air gap.

Preferably, the minimum width of the slot opening is greater than zero and less than or equal to two times of a minimum thickness of the air gap.

Preferably, the pole shoe has a reduced radial size at the connecting portion thereof for facilitating bending the easily bendable tip about the connecting portion.

Preferably, the pole shoe has a continuously or discontinuously axially-extending positioning slot at the connecting portion.

In the single phase permanent magnet motor of the present invention, at least one of two adjacent pole shoes is provided with an easily bendable tip, and the easily bendable tip is bendable toward the rotor for changing the distance between the two adjacent pole shoes, thus more rapidly finishing the winding of the stator winding.

### BRIEF DESCRIPTION OF THE DRAWINGS

Fig. 1 illustrates a single phase permanent magnet motor according to a first embodiment of the present invention.
Fig. 2 illustrates the single phase permanent magnet motor of Fig. 1, with an outer housing removed.
Fig. 3 illustrates the single phase permanent magnet motor of Fig. 2, with a stator winding and a rotary shaft removed.
Fig. 4 illustrates a stator core of the single phase permanent magnet motor of Fig. 3.
Fig. 5 illustrates the single phase permanent magnet motor of Fig. 4, with the easily bendable tip of the stator core bent toward the rotor.
Fig. 6 illustrates a rotor core and permanent magnetic poles of the single phase permanent magnet motor of Fig. 2.
Fig. 7 illustrates a stator core, a rotor core and permanent magnetic poles of a single phase permanent magnet motor according to a second embodiment of the present invention.
Fig. 8 illustrates a rotor core and permanent magnets of a single phase permanent magnet motor according to a third embodiment of the present invention.
Fig. 9 illustrates a rotor core and a permanent magnet of a single phase permanent magnet motor according to a fourth embodiment of the present invention.
Fig. 10 illustrates a stator core, a rotor core and a permanent magnet of a single phase permanent magnet motor according to a fifth embodiment of the present invention.

### DETAILED DESCRIPTION OF THE PREFERRED EMBODIMENTS

It should be noted that the figures are not drawn to scale and that elements of similar structures or functions are generally represented by like reference numerals for illustrative purposes throughout the figures. It also should be noted that the figures are only intended to facilitate the description of the preferred embodiments. The figures do not illustrate every aspect of the described embodiments and do not limit the scope of the present disclosure.

### First Embodiment

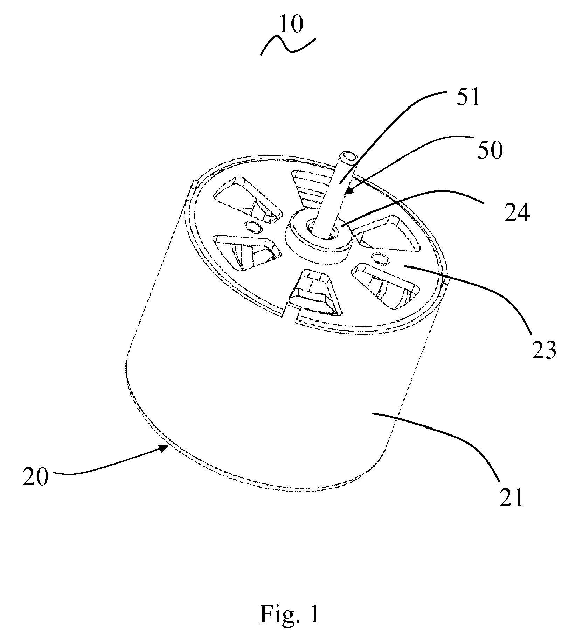

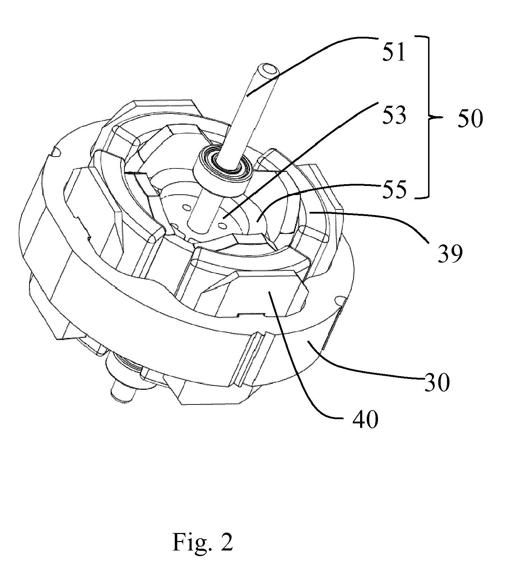

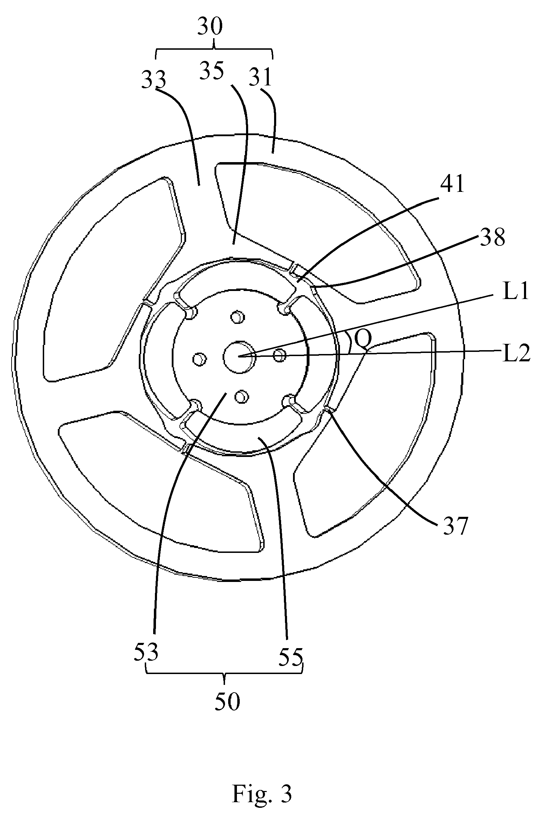

Referring to Fig. 1 to Fig. 6, the single phase permanent magnet motor 10 in accordance with a preferred embodiment of the present invention includes a stator 20 and a rotor 50 rotatable relative to the stator.

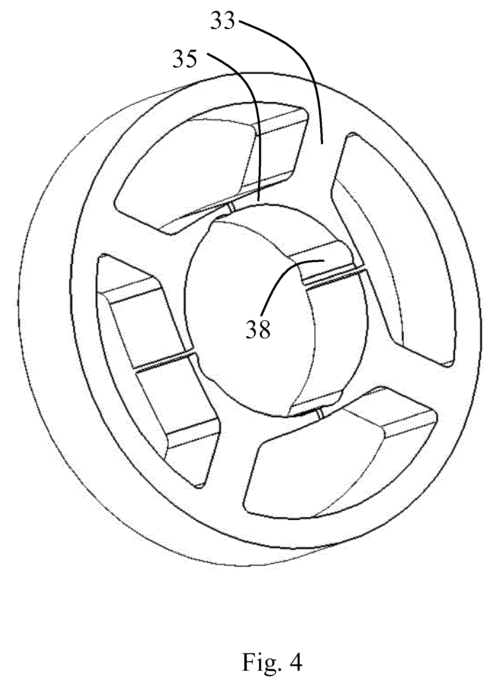

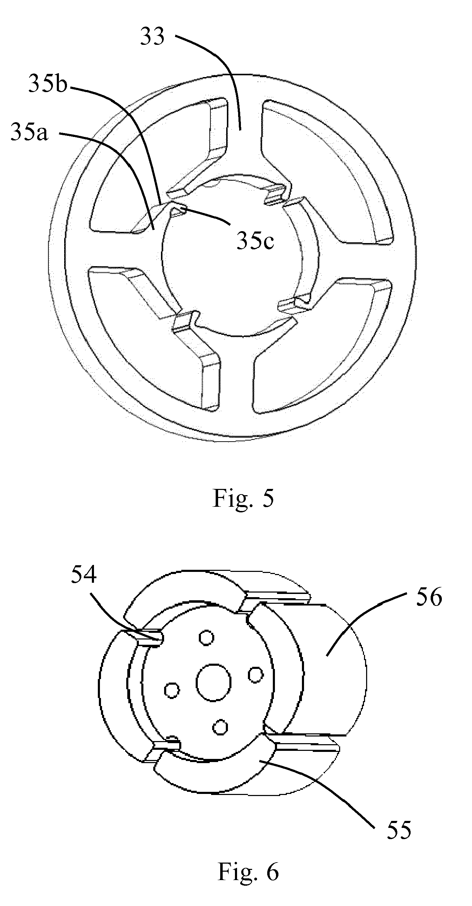

The stator 20 includes a cylindrical outer housing 21 with one open end, an end cap 23 mounted to the open end of the outer housing 21, a stator core 30 mounted in the outer housing 21, an insulating winding bracket 40 mounted to the stator core 30, and a stator winding 39 wound around the stator core 30 and supported by the insulating winding bracket 40. The stator core 30 includes an outer ring portion 31, a plurality of tooth bodies 33 extending inwardly from the outer ring portion 31, and a pole shoe 35 extending from a radial inner end to two circumferential sides of each tooth body 33. The stator winding 39 is wound around the tooth bodies 33. A slot opening 37 is defined between each two adjacent pole shoes 35. The slot opening 37 may be disposed at a middle position between two adjacent tooth bodies. Each pole shoe 35 includes a main portion 35a, a connecting portion 35b and an easily bendable tip 35c sequentially connected in a circumferential direction of the motor. The connecting portion 35b has a reduced radial size for facilitating bending of the easily bendable tip 35c with respect to the main portion 35a, for changing the circumferential width of the slot opening 37. Specifically, before the winding 39 is not wound around the corresponding tooth body 33, as shown in Fig. 5, the easily bendable tip 35c is bent toward the rotor 50, i.e. the main portion 35a, the connecting portion 35b and the easily bendable tip 35c together form a bent structure for increasing a width of the slot, thus facilitating winding of the stator winding 39 around the tooth body 33. After the stator winding 39 is wound around the tooth body, the easily bendable tip 35c is bent to the state (an initial state) as shown in Fig. 4 to reduce a distance between the two adjacent pole shoes 35.

The stator core 30 is made from a magnetic-conductive material. For example, the stator core 30 is formed by stacking magnetic laminations (silicon laminations commonly used in the industry) along an axial direction of the motor. Preferably, the tooth bodies 33 of the stator core 30 are uniformly spaced along the circumferential direction of the motor. Each tooth body 33 extends substantially radially inward from the outer ring portion 31. Each pole shoe 35 extends from the radial inner end to two circumferential sides of one corresponding tooth body 33.

Preferably, the main portion 35a of the pole shoe 35 has a radial thickness gradually decreasing in a direction from the tooth body 33 toward the slot openings 37, such that a magnetic reluctance of the main portion 35a of the pole shoe 35 gradually increasing in the direction from the tooth body 33 toward the slot openings 37. This design can achieve more stable motor operation and improved startup reliability.

In this embodiment, the pole shoe 35 defines a positioning slot 38 in an inner surface of the connecting portion 35b, which reduces the radial size of the connecting portion 35b for facilitating bending of the easily bendable tip 35c. In addition, the positioning slot 38 provides positioning function which prevents the rotor 50 from stopping at a dead point position.

In other embodiments, the slot opening 37 may offset from the middle position between two adjacent tooth bodies in a direction away from the adjacent positioning slot 38.

The rotor 50 is received in a space cooperatively bounded by the pole shoes 35. The rotor 50 includes a plurality of permanent magnetic poles 55 disposed along a circumferential direction of the rotor. An outer surface of each permanent magnetic pole 55 is an arc surface, such that the permanent magnetic poles 55 and the inner circumferential surfaces of the pole shoes 35 define therebetween a symmetrical uneven air gap 41. Preferably, a maximum thickness of the symmetrical uneven air gap 41 is more than 1.5 times of a minimum thickness thereof. Preferably, in a final motor product, inner surfaces of the main portions 35a and inner surfaces of the easily bendable tips 35c of the pole shoes 35 are located on a circle centered at a center of the rotor 50. The slot opening 37 has a minimum width greater than zero and less than or equal to four times of a minimum thickness of the symmetrical uneven air gap 41. Preferably, the minimum width of the slot opening 37 is greater than zero and less than or equal to two times of the minimum thickness of the symmetrical uneven air gap 41. This configuration can make startup and rotation of the motor smoother, improve the startup reliability of the motor, and reduce the startup dead point. The ring portion as used in this disclosure refers to a closed structure formed by extending continuously along the circumferential direction, which includes circular-ring portion, square ring portion or polygonal ring portion. The thickness of the symmetrical uneven air gap 41 refers to a radial thickness of the air gap.

In this embodiment, as shown in Fig. 6, each permanent magnetic pole 55 is formed by a permanent magnet 56. The rotor 50 further includes a rotor core 53, and the permanent magnet 56 is mounted to an outer circumferential surface of the rotor core 53. The outer circumferential surface of the rotor core 53 defines a plurality of axially-extending grooves 54. Each groove 54 is disposed at a junction of two adjacent permanent magnetic poles 55 to reduce magnetic leakage. Specifically, in order to make the permanent magnetic poles 55 and the inner circumferential surfaces of the pole shoes 35 form the symmetrical uneven air gap 41, the outer circumferential surface of the rotor core 53 and the inner circumferential surfaces of the pole shoes 35 are concentric circles, and a thickness of each permanent magnet 56 gradually decreases from a circumferential center to two circumferential ends thereof. In an alternative embodiment, the permanent magnetic poles 55 may also be formed by a single integral permanent magnet.

The rotor 50 further incudes a rotary shaft 51 passing through and fixed to the rotor core 53. One end of the rotary shaft 51 is mounted to the end cap 23 of the stator 20 through a bearing 24, and the other end is mounted to a bottom of the cylindrical outer housing 21 of the stator 20 through another bearing, such that the rotor 50 is capable of rotation relative to the stator 20. The ring portion as used in this disclosure refers to a closed structure formed by extending continuously along the circumferential direction.

In this embodiment, the number of the positioning slots 38 is the same as the number of the poles of the stator 20 and the number of the poles of the permanent magnetic poles of the rotor 50, and is four in this embodiment. In the present embodiment, the stator winding is a concentrated winded and, therefore, the number of the tooth bodies is the same as the number of the poles of the stator. In an alternative embodiment, each component of the stator winding spans over two or more tooth bodies, and each component corresponds to one stator pole. In this case, the number of the tooth bodies may be an integer times of the number of the stator poles, such as two times, three times or the like.

In this embodiment, the positioning slot 38 extends continuously along the axial direction of the motor and is defined in the inner circumferential surface of the pole shoe 35. In an alternative embodiment, the positioning slot 38 extends discontinuously along the axial direction of the motor. Preferably, the positioning slot 38 is spaced apart from the two adjacent tooth bodies by different distances, and the positioning slot 38 is closer to one of the two adjacent tooth bodies.

When the motor 10 is not energized, i.e. at an initial state, a center line of the permanent magnetic pole 55 of the rotor 50 is offset from a center line of the corresponding tooth body 33 by an angle, and the angle is also referred to as a startup angle. In this embodiment, the startup angle is greater than 45 degrees electric angle and less than 135 degrees electric angle. When the stator winding 39 of the motor 10 is supplied with an electric current with one direction, the rotor 50 can be started along one direction. When the stator winding 39 of the motor 10 is supplied with an electric current with an opposite direction, the rotor 50 can be started along an opposite direction. It should be understood that, when the startup angle is 90 degrees electric angle (i.e. the center of the permanent magnetic pole 55 and a symmetrical center of two corresponding adjacent tooth bodies 33 coincide with each other), the rotor 50 can be easily started in both directions, i.e. it is the easiest angle to achieve bidirectional startup. When the startup angle is offset from the 90 degrees electric angle, the rotor 50 is easier to start in one direction than in the opposite direction. It has been found from a large number of experiments that, when the startup angle is in the range of 45 degrees to 135 degrees electric angle, the startup of the rotor in both directions has good reliability.

Preferably, the positioning slot 38 is disposed between the easily bendable tip 35c and the main portion 35a of the corresponding pole shoe 35 in which the positioning slot 38 is located, and the easily bendable tip 35c bends toward the rotor 50 about an axial symmetrical axis of the positioning slot 38. Because of the presence of the positioning slot 38, the part of the pole shoe 35 corresponding to the positioning slot has a reduced thickness and can be easy to bend. Therefore, an additional bending line for facilitating the bending is not required.

### Second Embodiment

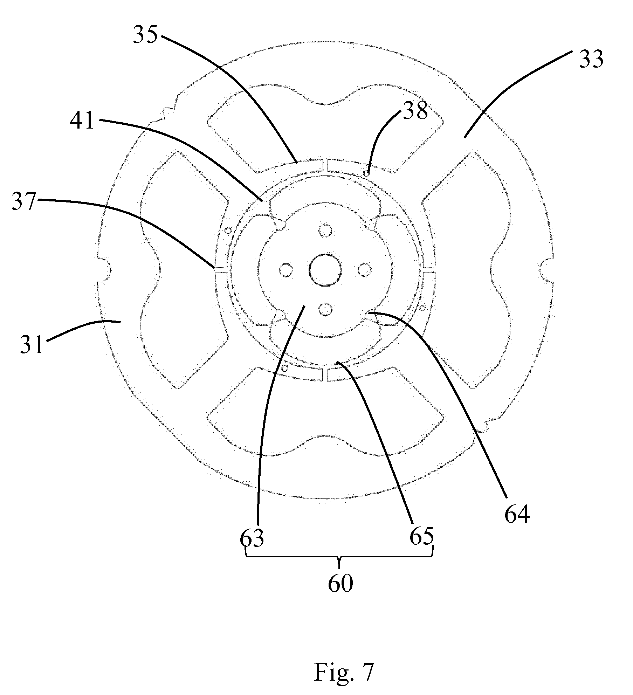

Referring to Fig. 7, a main difference between this embodiment and the first embodiment is that, the positioning slot 38 is disposed between an outer circumferential surface and the inner circumferential surface of the pole shoe 35 in the form of a through hole or blind hole. Preferably, the positioning slot 38 is disposed in the connecting portion of the pole shoe 35 (i.e. see Fig. 5, between the main portion 35a and the easily bendable tip 35c of the pole shoe 35). Because of the presence of the positioning slot 38, the part of the pole shoe 35 corresponding to the positioning slot 38 has a reduced thickness and can be easy to bend.

In addition, the rotor 60 includes a plurality of permanent magnetic poles 65 arranged along the circumferential direction of the rotor 60. An outer surface of each permanent magnetic pole 65 is an arc surface. Each permanent magnetic pole 65 is formed by a permanent magnet, and the permanent magnet is mounted to an outer circumferential surface of the rotor core 63. The outer circumferential surface of the rotor core 63 defines a plurality of axially-extending grooves 64. Each groove 64 is disposed at a junction of two adjacent permanent magnetic poles 65 to reduce magnetic leakage. Different from the first embodiment, the permanent magnet of this embodiment has an even thickness, and the outer circumferential surface of the rotor core 63 has a shape matching with the shape of the permanent magnet, i.e. the outer circumferential surface of the rotor core 63 and the inner circumferential surface of the pole shoe 35 are not concentric circles in the axial plane view. In an alternative embodiment, the permanent magnetic poles 65 may also be formed by a single integral permanent magnet.

### Third Embodiment

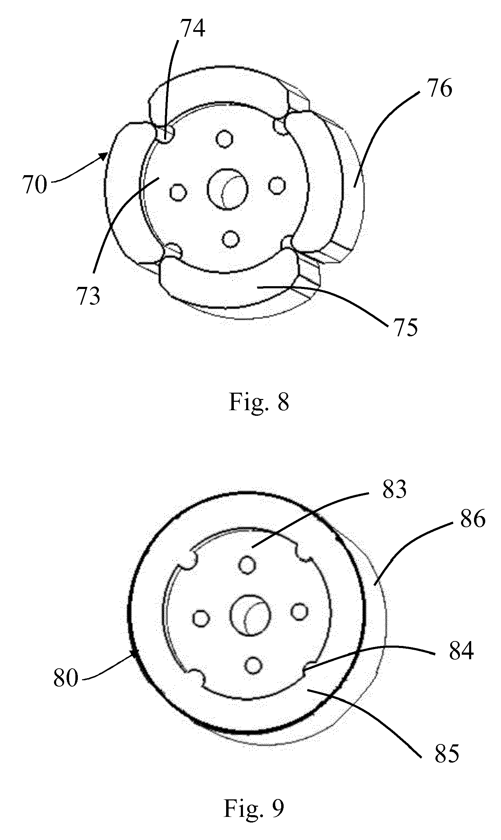

The rotor 70 of this embodiment is different from the rotors 50 and 60 of the above two embodiments. Referring to Fig. 8, the permanent magnetic poles 75 of this embodiment are formed by a plurality of permanent magnets 76, such as four permanent magnets 76. The outer circumferential surface of the rotor core 73 defines a plurality of axially-extending grooves74. Each groove 74 is disposed at a junction of two adjacent permanent magnets 76 to reduce magnetic leakage. The permanent magnets 76 are mounted to the outer circumferential surface of the rotor core 73. In this case, the inner surfaces of the pole shoes 35 are located on a circle centered at the center of the rotor 70 in an axial plane view. The outer surfaces of all the permanent magnets 76 cooperatively form a cylindrical surface centered at the center of the rotor 70 so as to make the air gap form an even air gap.

### Fourth Embodiment

Referring to Fig. 9, in this embodiment, the rotor 80 includes a rotor core 83 and an annular permanent magnetic pole body 85 disposed along the circumferential direction of the rotor. An outer circumferential surface of the annular permanent magnetic pole body 85 is concentric with the outer surface of an inner ring portion cooperatively formed by the pole shoes, such that the air gap formed between the annular permanent magnetic pole body 85 and the pole shoes is an even air gap. Specifically, the inner surfaces of the pole shoes are located on a circle centered at the center of the rotor 80 in the axial plane view, the outer surface of the annular permanent magnetic pole body 85 is a cylindrical surface and located on a circle centered at the center of the rotor 80 in the axial plane view. That is, the inner circumferential surface of the pole shoe is concentric with the outer circumferential surface of the permanent magnetic pole body 85, thus forming an even air gap between the inner circumferential surface of the pole shoe and the outer circumferential surface of the permanent magnetic pole body 85.

The permanent magnetic poles 85 may be formed by a single annular permanent magnet 88 which is mounted to the outer circumferential surface of the rotor core 83. The outer circumferential surface of the rotor core 83 defines a plurality of axially-extending grooves 84. Each groove 84 is disposed at a junction of two adjacent permanent magnetic poles 85 to reduce magnetic leakage.

### Fifth Embodiment

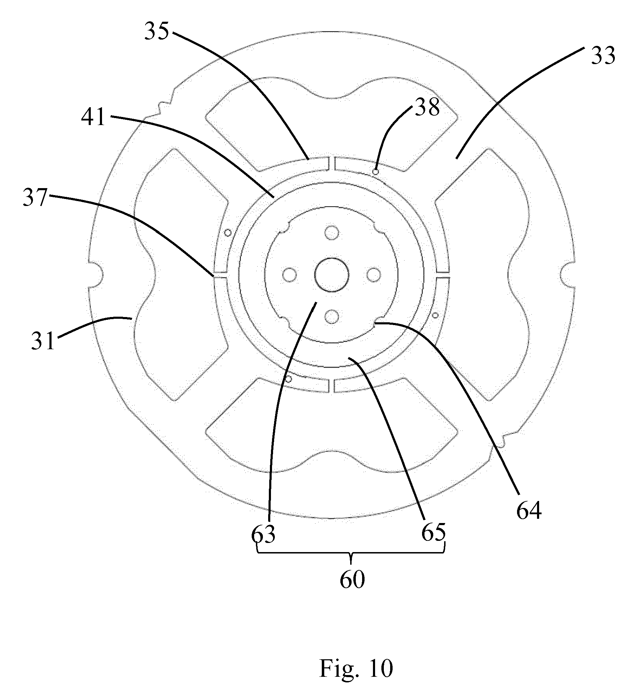

Referring to Fig. 10, this embodiment is similar to the second embodiment, except that the outer circumferential surface of the permanent magnetic pole 65 is concentric with the inner circumferential surface of an inner ring portion cooperatively formed by the pole shoes 35, thus forming a substantially even air gap therebetween. Specifically, the inner surfaces of the pole shoes 35 are located on a circle centered at the center of the rotor 60 in the axial plane view, the outer surface of the annular permanent magnetic pole 65 is a cylindrical surface and located on a circle centered at the center of the rotor 60 in the axial plane view. That is, the inner circumferential surface of the pole shoe is concentric with the outer circumferential surface of the permanent magnetic pole 65, thus forming a substantially even air gap between the inner circumferential surface of the pole shoe 35 and the outer circumferential surface of the permanent magnetic pole 65. It should be understood that the integral annular magnet of this embodiment may also be replaced by the individual magnets of the previous embodiments. The term "substantially even air gap" as used in this application refers to that the air gap between the outer circumferential surface of the permanent magnetic pole and the inner circumferential surface of the pole shoe is an even air gap except for the regions corresponding to the positioning slots 38, slot openings 37 and chamfered ends of the individual permanent magnets.

The present invention further provides a method for making the above single phase permanent magnet motor, including the following steps:
S1: a stator core is configured; the stator core includes an outer ring portion, a plurality of tooth bodies extending inwardly from the outer ring portion, and a pole shoe extending from a radial inner end to two circumferential sides of each tooth body; a slot opening is defined between each two adjacent pole shoes; at least one of the two adjacent pole shoes includes a main portion, a connecting portion and an easily bendable tip sequentially connected in a circumferential direction of the stator; the main portion, the connecting portion and the easily bendable tip form an inward bent portion at the connecting portion;
S2: the stator winding is wound around the tooth bodies;
S3: the easily bendable tip is bent about the connecting portion to narrow the slot opening;
S4: the rotor is assembled; the rotor has permanent magnetic poles arranged along a circumferential direction of the rotor, the permanent magnetic poles and the pole shoes form an air gap therebetween; the slot opening has a minimum width greater than zero and less than or equal to four times of a minimum thickness of the air gap.

The step S1 includes forming the inward bent portion at the same time when the stator core is formed, or alternatively includes firstly forming the stator core and then bending the easily bendable tip inwardly to form the bent portion.

Preferably, the minimum width of the slot opening is greater than zero and less than or equal to two times of a minimum thickness of the air gap.

In the above embodiments, the slot opening 37 has an even circumferential width. It should be understood that, alternatively, each slot opening 37 may has an uneven width, e.g. has a trumpet-shape with narrow inside and wide outside. In this case, the width of the slot opening 37 refers to a minimum width of the slot opening. In this embodiment, the slot opening 37 is formed along a radial direction of the motor. Alternatively, the slot opening 37 may be formed along a direction deviating from the radial direction of the motor. The slot openings 37 between adjacent tooth bodies may have equal or unequal size, and may have the same or different shape.

Although the invention is described with reference to one or more preferred embodiments, it should be appreciated by those skilled in the art that various modifications are possible. Therefore, the scope of the invention is to be determined by reference to the claims that follow.

## Claims

1. A single phase permanent magnet motor (10) comprising:
a stator (20) comprising a stator core (30), the stator core (30) comprising:
a first ring portion (31),
a plurality of tooth bodies (33) extending radially from the first ring portion (31); and
a pole shoe (35) extending from a radial distal end to two circumferential sides of each tooth body (33), a slot opening (37) defined between each two adjacent pole shoes (35), at least one of the two adjacent pole shoes (35) comprising a main portion (35a), a connecting portion (35b) and an easily bendable tip (35c) sequentially connected in a circumferential direction of the stator, the main portion (35a) being connected to the tooth body (33), the easily bendable tip (35c) being bendable with respect to the connecting portion (35b), for changing a distance between the two adjacent pole shoes (35).

2. The single phase permanent magnet motor of claim 1, wherein the stator (20) further comprises a stator winding (39) wound around the stator core (30).

3. The single phase permanent magnet motor of claim 2, further comprising a rotor (50, 60, 70 or 80) rotatable relative to the stator (20), the rotor (50, 60, 70 or 80) comprising a rotor core (53, 63, 73 or 83) and permanent magnetic poles (55, 65, 75 or 85) arranged along a circumferential direction of the rotor core (53, 63, 73 or 83).

4. The single phase permanent magnet motor of claim 3, wherein the first ring portion (31) is an outer ring portion, the tooth bodies (33) extend inwardly from the outer ring portion, each pole shoe (35) extends from a radial inner end of the corresponding tooth body (33), and the rotor (50, 60, 70 or 80) is rotatably received in the stator (20).

5. The single phase permanent magnet motor of claim 4, wherein the slot opening (37) has a minimum width greater than zero and less than or equal to four times of a minimum thickness of an air gap (41) defined between the stator (20) and the rotor (50, 60, 70 or 80).

6. The single phase permanent magnet motor of claims 4 or 5, wherein an outer circumferential surface of the rotor core (53, 63, 73 or 83) defines a plurality of axially-extending grooves (54, 64, 74 or 84) each located at a junction of two permanent magnetic poles (55, 65, 75 or 85).

7. The single phase permanent magnet motor of any one of claims 1-6, wherein a radial cross-sectional area of the connecting portion (35b) is less than a radial cross-sectional area of an end of the main portion (35a) connected to the connecting portion (35b).

8. The single phase permanent magnet motor of claim 7, wherein the main portion (35a) has a radial thickness gradually decreasing in a direction from the tooth body (33) toward the slot openings (37).

9. The single phase permanent magnet motor of claim 7, wherein the connecting portion (35b) comprises a positioning slot (38) defined in an inner circumferential surface of the pole shoe (35), an inner surface of the easily bendable tip (35c) and an inner surface of the main portion (35a) are located on a cylindrical surface centered at a rotation axis of the rotor (50, 60, 70 or 80).

10. The single phase permanent magnet motor of claim 9, wherein the positioning slot (38) extends continuously or discontinuously in an axial direction of the motor (10), and each positioning slot (38) is spaced from the two adjacent tooth bodies (33) by different distances.

11. The single phase permanent magnet motor of claim 1, wherein the connecting portion (35b) defines a positioning slot (38), the positioning slot (38) is an invisible positioning slot (38) located between an outer circumferential surface and an inner circumferential surface of the pole shoe (35).

12. The single phase permanent magnet motor of any one of claims 9-11, wherein the slot opening (37) is located at a middle position between two adjacent tooth bodies (33) or offset from the middle portion in a direction away from the adjacent positioning slot (38).

13. The single phase permanent magnet motor of claim 1, further comprising a rotor (50, 60, 70 or 80) rotatable relative to the stator (20), the rotor (50, 60, 70 or 80) comprising a rotor core (53, 63, 73 or 83) and permanent magnetic poles (55, 65, 75 or 85) arranged along a circumferential direction of the rotor core (53, 63, 73 or 83), wherein each connecting portion (35b) comprises a positioning slot (38), the number of the positioning slots (38) is the same as the number of the permanent magnetic poles (55, 65, 75 or 85).

14. A method for making a single phase permanent magnet motor of any one of claims 3-13, the method comprising the steps of:
configuring the stator core (30), the easily bendable tip (35c) being bent relative to the main portion (35a) about the connecting portion (35b);
winding the stator winding (39) around the stator core (30); and
bending the easily bendable tip (35c) about the connecting portion (35b) to narrow the slot opening (37).

15. The method of claim 14, further comprising the step of assembling a rotor (50, 60, 70 or 80), wherein the rotor (50, 60, 70 or 80) has permanent magnetic poles (55, 65, 75 or 85) arranged along a circumferential direction of the rotor (50, 60, 70 or 80), the permanent magnetic poles (55, 65, 75 or 85) and the pole shoes (35) define an air gap (41) therebetween; the slot opening (37) has a minimum width greater than zero and less than or equal to four times of a minimum thickness of the air gap (41).
